# EUROPÄISCHE PATENTSCHRIFT

(11) **EP 3 812 653 B1**
(45) Veröffentlichungstag und Bekanntmachung des Hinweises auf die Patenterteilung: **23.02.2022**
(21) Anmeldenummer: 20203682.8
(22) Anmeldetag: 23.10.2020
(51) Int. Cl.: F21S 43/14, F21S 43/239, F21S 43/241, F21S 43/243, F21S 43/249

(54) **SIGNALLEUCHTE MIT EINEM LICHTLEITER**
SIGNAL LIGHT WITH A LIGHT GUIDE
FEU DE SIGNALISATION POURVU DE GUIDE DE LUMIÈRE

(30) Priorität: 23.10.2019 DE 102019128663
(43) Veröffentlichungstag der Anmeldung: 28.04.2021
(73) Patentinhaber: Marelli Automotive Lighting Reutlingen (Germany) GmbH, 72762 Reutlingen (DE)
(72) Erfinder: Ritter, Michael, 72827 Wannweil (DE); Schott, Dominik, 72127 Kusterdingen (DE)
(74) Vertreter: DREISS Patentanwälte PartG mbB

(56) Entgegenhaltungen:
- EP-A1- 2 012 056
- EP-A1- 3 421 873
- EP-A1- 3 456 587
- EP-B1- 2 012 056
- CN-U- 206 724 036
- FR-A1- 3 042 258
- FR-A1- 3 044 744
- JP-A- 2015 201 278

## Beschreibung

Die vorliegende Erfindung betrifft eine Signalleuchte für Kraftfahrzeuge mit den Merkmalen des Oberbegriffs des Anspruchs 1. Eine solche Signalleuchte ist aus der EP 2 012 056 A1 bekannt.

Die bekannte Signalleuchte weist einen Lichtleiter, eine erste Lichtquelle, mit der Licht einer ersten Lichtfarbe emittierbar ist, und eine zweite Lichtquelle, mit der Licht einer zweiten Lichtfarbe emittierbar ist, auf. Der Lichtleiter weist wenigstens einen Lichtleiterabschnitt auf, wobei der Lichtleiterabschnitt eine erste Lichteintrittsoptik besitzt, die dazu eingerichtet ist, ein von der ersten Lichtquelle ausgehendes Lichtbündel aufzunehmen und zu einem im Lichtleiterabschnitt propagierenden Lichtbündel umzuformen. Weiter weist der Lichtleiterabschnitt eine zweite Lichteintrittsoptik auf, die dazu eingerichtet ist, ein von der zweiten Lichtquelle ausgehendes Lichtbündel aufzunehmen und zu einem im Lichtleiterabschnitt propagierenden Lichtbündel umzuformen. Die Lichteintrittsoptiken sind nebeneinander angeordnet. Bei der aus der EP 2 012 056 A1 bekannten Signalleuchte werden die Lichtbündel von zwei Signallichtfunktionen in Streifen zerlegt und die Streifen dann abwechselnd nebeneinander angeordnet. Bei einer aus der DE 10 2017 115 899 A1 wird ebenfalls eine Signalleuchte mit zwei Signalfunktionen und unterschiedlichen Signallichtfarben beschrieben. Eine weitere derartige Signalleuchte ist aus EP 3 456 587 A1 bekannt.

Durch eine gezielte Anordnung brechender Flächen eines Lichtleiters, bzw. einer Dickwandoptik werden Lichtbündel unterschiedlicher Lichtquellen in geeigneter Weise durchmischt. Nachteil dieser Lösung ist, dass das Grundkonzept bereits zwei Optiken benötigt und zur Erzeugung regelkonformer Lichtverteilungen eine weitere Scheibe erforderlich ist.

Viele Kraftfahrzeuge weisen aufgrund von aerodynamischen Anforderungen sowie gestalterischen Designvorgaben Scheinwerfer mit möglichst geringen Abmaßen auf. Um den benötigten Bauraum zu minimieren und um eine durchgängige Lichtsignatur zu erreichen, werden Leuchten-Funktionen wie Tagfahrlicht und Blinklicht oftmals zusammengebaut realisiert, soweit es die gesetzlichen Bestimmungen sowie die technischen Anforderungen ermöglichen.

Des Weiteren stellen die Fahrzeughersteller immer höhere Anforderungen hinsichtlich der Homogenität ihrer Leuchten, wobei einzelne Segmente zunehmend einzeln ansteuerbar sein sollen. Am Fahrzeug-Exterieur finden im Allgemeinen weiße und gelbe Lichtquellen Verwendung, wobei auch weitere Farben zur Akzentuierung zum Einsatz kommen. Um nun Funktionen zu kombinieren, müssen diese Lichtquellen unterschiedlicher Farbe unter einem gemeinsamen Lichteintritt positioniert werden. Dies kann ein Lichtleiter mit größerem Querschnitt sein, wobei dann keine Animation möglich ist. Oder man nutzt eine andere Optik, z.B. mit größerer Brennweite, mehr Bauraum und/oder teureren Lichtquellen und teurerer Verbindungstechnik.

Dadurch sinkt im Allgemeinen die Effizienz und/oder das Erscheinungsbild mindestens einer Funktion wird beeinträchtigt. Eine weitere Möglichkeit besteht darin, mehrere Lichteintritte zu verwenden und das Licht im weiteren Strahlengang zum Lichtaustritt hin zu vermischen. Hierbei besteht im Allgemeinen das Problem, dass der Lichtaustritt von keiner Funktion optimal bedient werden kann, was selbst durch eine ineffizientere Auslegung nicht vollständig kompensiert werden kann.

Vor diesem Hintergrund besteht die Aufgabe der vorliegenden Erfindung in der Angabe einer Signalleuchte für Kraftfahrzeuge, in die zwei Signallichtfunktionen mit unterschiedlicher Signallichtfarbe integriert sind und bei der beide Signallichtfunktionen ein homogenes Erscheinungsbild aufweisen. Dabei wird das Erscheinungsbild der Signalleuchte mit einem Lichtleiter erzeugt.

Diese Aufgabe wird mit den Merkmalen des Anspruchs 1 gelöst. Dabei unterscheidet sich die Erfindung von dem eingangs genannten Stand der Technik dadurch, dass der Lichtleiterabschnitt Umlenkteilflächen aufweist, die in der gleichen Richtung nebeneinander angeordnet sind wie die Lichteintrittsoptiken, wobei eine erste Umlenkteilfläche der Umlenkteilflächen so angeordnet ist, dass sie von einem ersten Teilbündel des Lichtes der ersten Lichtfarbe beleuchtet ist, eine zweite Umlenkteilfläche der Umlenkteilflächen so angeordnet ist, dass sie von einem zweiten Teilbündel des Lichtes der ersten Lichtfarbe beleuchtet ist, eine dritte Umlenkteilfläche der Umlenkteilflächen so angeordnet ist, dass sie von einem ersten Teilbündel des Lichtes der zweiten Lichtfarbe beleuchtet ist, und eine vierte Umlenkteilfläche der Umlenkteilflächen so angeordnet ist, dass sie von einem zweiten Teilbündel des Lichtes 32 der zweiten Lichtfarbe beleuchtet ist, wobei die zweite Umlenkteilfläche der Umlenkteilflächen und die dritte Umlenkteilfläche der Umlenkteilflächen so angeordnet sind, dass die zweite Umlenkteilfläche mit an der dritten Umlenkteilfläche reflektiertem Licht des zweiten Teilbündels des Lichtes der zweiten Lichtfarbe beleuchtet ist, und die dritte Umlenkteilfläche mit an der zweiten Umlenkteilfläche reflektiertem Licht des zweiten Teilbündels des Lichtes der ersten Lichtfarbe beleuchtet ist.

Erfindungsgemäß weist der Lichtleiterabschnitt vier Teilflächen auf.

Mit dieser Lösung kann Licht der Lichtquellen über geeignete Einkoppeloptiken paarweise in den Lichtleiter eingekoppelt werden. Anschließend werden die Lichtbündel in Teillichtbündel unterteilt, und jeweils die Hälfte des eingekoppelten Lichts einer Lichtquelle wird in den Strahlengang des Lichtbündels der anderen Farbe reflektiert. Mit Abstand betrachtet erscheint die Lichtaustrittsfläche der Signalleuchte gleichmäßig ausgeleuchtet. Diese Anordnung kann dann mehrmals nebeneinander angeordnet werden, um ein linienförmiges Erscheinungsbild zu erreichen. Die Erfindung minimiert die oben genannten Nachteile des Standes der Technik und steigert die Homogenität des Erscheinungsbildes einer bifunktionalen Signalleuchte, ohne Einbußen hinsichtlich Bauraum oder Kosten in Kauf nehmen zu müssen.

Eine vorteilhafte Ausgestaltung zeichnet sich dadurch aus, dass das Licht der ersten Lichtfarbe weißes Licht für eine Tagfahrlichtfunktion oder rotes Licht für eine Heckleuchtenfunktion ist.

Bevorzugt ist auch, dass das Licht der zweiten Lichtfarbe gelbes Licht für eine Blinklichtfunktion ist.

Weiter ist bevorzugt, dass die Lichteintrittsoptiken dazu eingerichtet sind, einen Öffnungswinkel des in sie eintretenden und in ihnen propagierenden Lichtes zu verkleinern.

Eine weitere vorteilhafte Ausgestaltung zeichnet sich dadurch aus, dass die Lichteintrittsoptiken dazu eingerichtet sind, das in sie eintretende und in ihnen propagierende Licht parallel auszurichten.

Eine weitere vorteilhafte Ausgestaltung zeichnet sich dadurch aus, dass die Lichteintrittsoptiken integrale, stoffschlüssige Bestandteile des Lichtleiters sind.

Bevorzugt ist auch, dass der Lichtleiterabschnitt eine Lichtaustrittsfläche, eine der Lichtaustrittsfläche längs der Hauptlichtausbreitungsrichtung des Lichtes im Lichtleiterabschnitte gegenüberliegende rückseitige Umlenkfläche und sich zwischen der Lichtaustrittsfläche und der rückseitigen Umlenkfläche erstreckende Seitenflächen aufweist, wobei die rückseitige Umlenkfläche nicht rechtwinklig, sondern schräg zu den Seitenflächen angeordnet ist.

Weiter ist bevorzugt, dass die rückseitige Umlenkfläche einzelne Umlenkteilflächen aufweist, die so geformt und angeordnet sind, dass auf sie von den Lichteintrittsoptiken her einfallendes Licht der ersten Lichtfarbe und Licht der zweiten Lichtfarbe in die Teilbündel zerlegt wird.

Eine weitere vorteilhafte Ausgestaltung zeichnet sich dadurch aus, dass die Umlenkteilflächen so angeordnet sind, dass ein Teilbündel aus einem Strahlengang des Lichtes der ersten Lichtfarbe räumlich mit einem Teilbündel aus einem Strahlengang des Lichtes der zweiten Lichtfarbe vertauscht wird.

Bevorzugt ist auch, dass der Lichtleiter ein einstückiger Lichtleiter ist, der mehrere der Lichtleiterabschnitte aufweist, wobei die Lichtleiterabschnitte nebeneinander liegen, so dass die Lichtaustrittsflächen der Lichtleiterabschnitte eine zusammenhängende Lichtaustrittsfläche des Lichtleiters bilden.

Weitere Vorteile ergeben sich aus der nachfolgenden Beschreibung, den Zeichnungen und den Unteransprüchen. Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, welcher durch die anliegenden Ansprüche definiert wird, zu verlassen.

Ausführungsbeispiele der Erfindung sind in den Zeichnungen dargestellt und werden in der nachfolgenden Beschreibung näher erläutert.

Dabei zeigen, jeweils in schematischer Form:
- Figur 1: eine Seitenansicht einer Signalleuchte in einem Schnitt als Beispiel für das technische Umfeld der Erfindung;
- Figur 2: die Signalleuchte der Figur 1 in einer Vorderansicht;
- Figur 3: ein Beispiel einer bekannten, nicht erfindungsgemäßen Anordnung eines Lichtleiters mit paarweise nebeneinander angeordneten Lichteintrittsoptiken;
- Figur 4: ein Ausführungsbeispiel eines Lichtleiters, mit dem sich eine erfindungsgemäße Signalleuchte verwirklichen lässt;
- Figur 5: eine perspektivische Darstellung eines Teils eines Lichtleiters einer erfindungsgemäßen Signalleuchte mit zwei Lichteintrittsoptiken;
- Figur 6: eine Schrägansicht des Lichtleiters aus der Figur 5 aus einem Blickwinkel, in dem in die Rückseite des Lichtleiters eingeformte Umlenkflächen sichtbar sind;
- Figur 7: den Gegenstand der Figuren 5 und 6 in einer Draufsicht zusammen mit ausgewählten Lichtstrahlen von Licht; und
- Figur 8: eine Ansicht eines Lichtleiters eines weiteren Ausführungsbeispiels einer erfindungsgemäßen Signalleuchte.

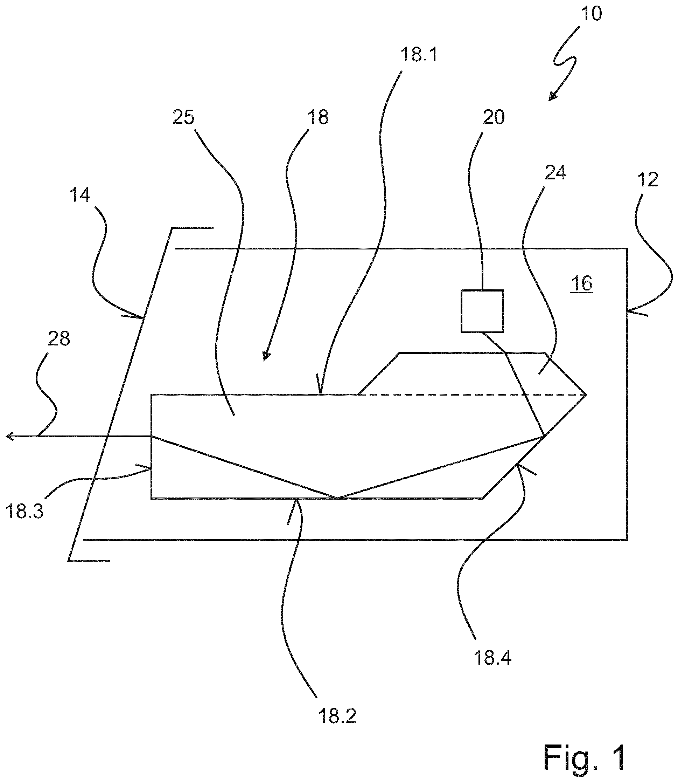

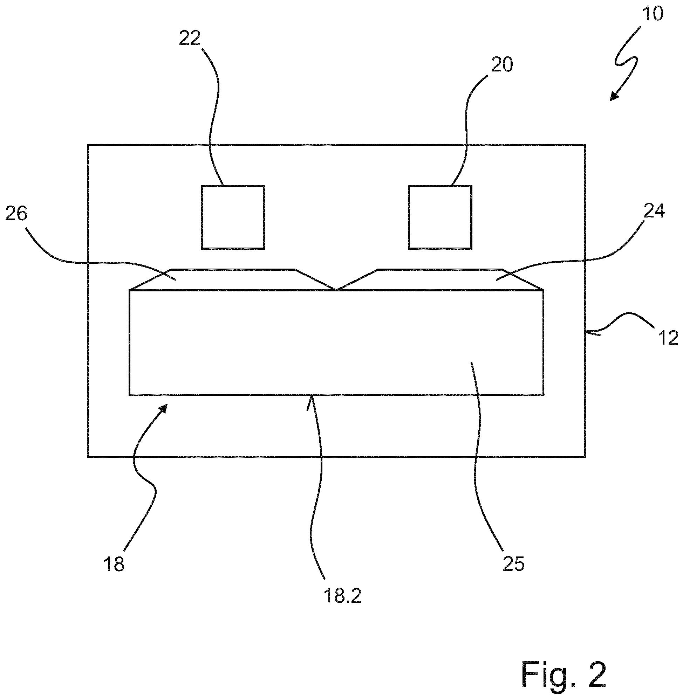

Im Einzelnen zeigen die Figuren 1 und 2 jeweils eine Signalleuchte 10 für Kraftfahrzeuge mit einem Gehäuse 12, dessen Lichtaustrittsöffnung durch eine transparente Abdeckscheibe 14 abgedeckt wird. In dem vom dem Gehäuse 12 und der Abdeckscheibe 14 begrenzten Innenraum 16 ist ein Lichtleiter 18, eine erste Lichtquelle 20 und eine zweite Lichtquelle 22 angeordnet. Neben dem Signallichtmodul, das durch den Lichtleiter 18 und die Lichtquellen 20 und 22 gebildet wird, können weitere Signallichtmodule oder Scheinwerferlichtmodule in dem Gehäuse 12 angeordnet sein.

Mit der ersten Lichtquelle 20 ist Licht einer ersten Lichtfarbe emittierbar, zum Beispiel weißes Licht für eine Tagfahrlichtfunktion oder rotes Licht für eine Heckleuchtenfunktion. Mit der zweiten Lichtquelle 22 ist Licht einer zweiten Lichtfarbe emittierbar, zum Beispiel gelbes Licht für eine Blinklichtfunktion. Die ersten Lichtquellen und die zweiten Lichtquellen sind bevorzugt in einer Ebene angeordnet.

Der Lichtleiter 18 weist eine erste Lichteintrittsoptik 24 auf, die dazu eingerichtet ist, ein von der ersten Lichtquelle 20 mit einem ersten Öffnungswinkel ausgehendes erstes Lichtbündel aufzunehmen und zu einem im Lichtleiter 18 mit einem zweiten Öffnungswinkel propagierenden zweiten Lichtbündel umzuformen.

Der Lichtleiter 18 weist auch eine zweite Lichteintrittsoptik 26 auf, die dazu eingerichtet ist, ein von der zweiten Lichtquelle 22 mit einem dritten Öffnungswinkel ausgehendes drittes Lichtbündel aufzunehmen und zu einem im Lichtleiter 18 mit einem vierten Öffnungswinkel propagierenden vierten Lichtbündel umzuformen.

Dabei ist der zweite Öffnungswinkel bevorzugt kleiner als der erste Öffnungswinkel, und der vierte Öffnungswinkel ist bevorzugt kleiner als der dritte Öffnungswinkel.

In dem Lichtleiter 18 wird das Licht der Lichtquellen 20, 22 durch Reflexionen an einer rückseitigen Umlenkfläche 18.4 des Lichtleiters 18 und ggf. auch an Seitenflächen 18.1, 18.2 des Lichtleiters 18 zu einer Lichtaustrittsfläche 18.3 des Lichtleiters 18 umgelenkt und tritt schließlich aus der Lichtaustrittsfläche 18.3 aus dem Lichtleiter 18 aus. Anschließend tritt das Licht durch die transparente Abdeckscheibe 14 hindurch aus der Signalleuchte 10 aus.

Die beiden Lichteintrittsoptiken 24, 26 sind nebeneinander angeordnet. Eine Nebeneinanderanordnung ist hier eine Anordnung quer zur Hauptlichtaustrittsrichtung aus dem Lichtleiter. Die Lichteintrittsoptiken 24, 26 können integrale, stoffschlüssige Bestandteile des Lichtleiters 18 sein, wie es in den Figuren 1 und 2 dargestellt ist. Alternativ dazu können beide oder auch nur eine der Lichteintrittsoptiken 24, 26 auch als separate optische Elemente wie Linsen, katadioptrische Optiken oder Reflektoren verwirklicht sein.

Eine Verringerung des Öffnungswinkels des von jeweils einer der Lichtquellen 20, 22 ausgehenden Lichtes ergibt sich bereits bei einer ebenen Lichteintrittsfläche durch die Brechung des in das transparente Lichtleitermaterial eintretenden Lichtes. Die Verringerung kann durch eine entsprechende Form der Lichteintrittsoptiken als fokussierende Linse oder katadioptrische Optik verstärkt werden. Die Verstärkung kann zum Beispiel soweit gehen, dass das Licht, wenn es von den Lichteintrittsoptiken 24, 26 in den übrigen Lichtleiter 25 eintritt, parallel ausgerichtet ist.

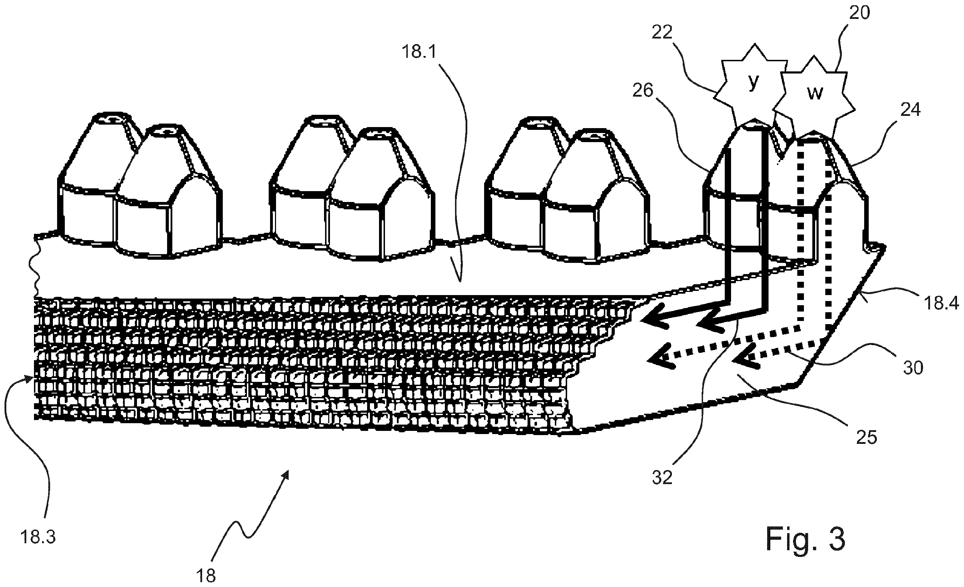

Figur 3 zeigt ein Beispiel einer bekannten Anordnung eines Lichtleiters 18 mit paarweise nebeneinander angeordneten Lichteintrittsoptiken 24, 26, schematisch dargestellten Lichtquellen 20,22 und Strahlengängen des von den Lichtquellen 20, 22 in die Lichteintrittsoptiken 24 und 26 eingespeisten und von dort in den verbleibenden Teil des Lichtleiters 18 eintretenden und innerhalb des Lichtleiters 18 zur Lichtaustrittsfläche 18.3 propagierenden Lichtes 30 einer ersten Lichtfarbe und Lichtes 32 einer zweiten Lichtfarbe. Jedes Paar von Lichteintrittsoptiken beleuchtet einen Teilbereich einer zusammenhängenden Lichtaustrittsfläche des Lichtleiters. Dabei bildet jeder solche Teilbereich zusammen mit seinem zugeordneten Paar von Lichteintrittsoptiken einen Lichtleiterabschnitt. In einem Ausführungsbeispiel weist die erfindungsgemäße Signalleuchte ebenfalls mehrere solcher Lichtleiterabschnitte auf, wobei die einzelnen Lichtleiterabschnitte die diesbezüglich im Anspruch 1 genannten Merkmale aufweisen.

Das Licht 30, 32 beider Lichtquellen 20, 22 tritt, bevorzugt nach einer in den Lichteintrittsoptiken 24, 26 erfolgenden Parallelisierung, aus den Lichteintrittsoptiken heraus in den verbleibenden Teil 25 des Lichtleiters 18 ein und wird darin durch Reflexion an einer rückseiteigen Umlenkfläche 18.4 und ggf. auch an Seitenflächen 18.1 zur Lichtaustrittsfläche 18.3 umgelenkt, wo es bevorzugt als paralleles Licht auftrifft. Die Bezeichnung als rückseitige Umlenkfläche 18.4 beschreibt die Lage dieser Umlenkfläche als eine der Lichtaustrittsfläche 18.3 gegenüberliegende Fläche. Die rückseitige Umlenkfläche ist bevorzugt nicht rechtwinklig, sondern schräg zu den Seitenflächen 18.1 und 18.2 angeordnet. Bevorzugt schließt die in der Zeichnungsebene liegende Richtungskomponente des Lotes auf die rückseitige Umlenkfläche 18.4 einen Winkel von 45° mit den Seitenflächen 18.1 und 18.2 ein. Die Beleuchtung der Lichtaustrittsfläche 18.3 mit parallelem Licht wird allgemein angestrebt, da sich paralleles Licht gut steuerbar in vorgegebene Richtungen streuen lässt. Diese Eigenschaft ist für die Erzeugung regelkonformer Signallichtverteilungen hilfreich.

Das Licht 30 der ersten Lichtfarbe propagiert in einem ersten Strahlengang und tritt aus einem ersten Bereich der Lichtaustrittsfläche 18.3 aus. Das Licht 32 der zweiten Lichtfarbe propagiert in einem zweiten Strahlengang und tritt aus einem zweiten Bereich der Lichtaustrittsfläche 18.3 aus, der neben dem ersten Bereich der Lichtaustrittsfläche liegt. Eine lange und schmale Lichtaustrittsfläche 18.3 wird mit dieser Technik dadurch aus dem Inneren des Lichtleiters 18 heraus ausgeleuchtet, dass mehrere Paare von ersten Lichtquellen 20 und zweiten Lichtquellen 22 mit ihren zugehörigen Lichteintrittsoptiken 24, 26 über die Länge des Lichtleiters 18 verteilt angeordnet sind, so dass der Lichtleiter aus mehreren Lichtleiterabschnitten besteht.

Für die Realisierung einer ersten Lichtfunktion werden nur die Lichtquellen gleicher Farbe eingeschaltet. Die von diesen Lichtquellen beleuchteten Bereiche der Lichtaustrittsfläche sind durch die Bereiche voneinander getrennt, die beim Erzeugen einer zweiten Lichtfunktion mit Licht der zweiten Lichtquellen beleuchtet werden. Dadurch wechseln sich helle und dunkle Bereiche der Lichtaustrittsfläche ab. Aus einiger Entfernung fällt dies nicht auf, weil die helleren Bereiche die dunkleren Bereiche überstrahlen. Aus der Nähe sind die hellen und dunklen Bereiche aber noch mehr oder weniger deutlich unterscheidbar, was unerwünscht ist. Diese Erläuterungen gelten auch für die Erfindung. Wesentliche Unterschiede zwischen dem Gegenstand der Figur 3 und der Erfindung bestehen zum Beispiel in der Form der rückseitigen Umlenkfläche 18.4.

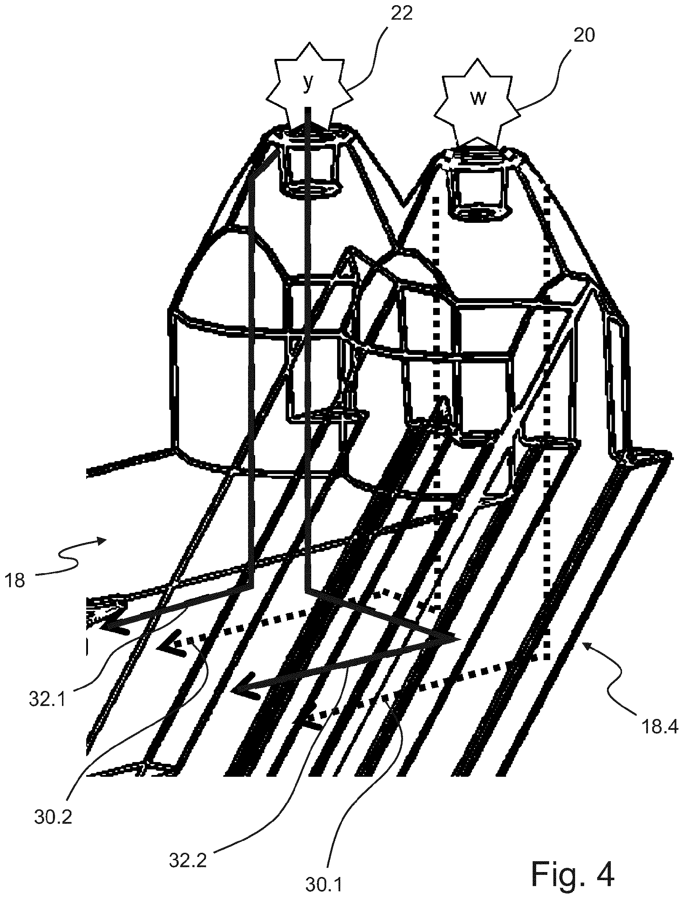

Figur 4 zeigt ein Ausführungsbeispiel eines Lichtleiters 18, mit dem sich eine erfindungsgemäße Signalleuchte verwirklichen 10 lässt. Dieser Lichtleiter 18 zeichnet sich dadurch aus, dass das von den hier ebenfalls paarweise angeordneten Lichtquellen 20, 22 emittierte Licht von den zugehörigen Lichteinkoppeloptiken 24, 26 zunächst in zwei zueinander parallelen Strahlengängen auf eine reflektierende rückseitige Umlenkfläche 18.4 des Lichtleiters 18 gelenkt wird. Diese rückseitige Umlenkfläche 18.4, die in der Figur 4 durch den Lichtleiter 18 verdeckt wird, weist einzelne Umlenkteilflächen auf, die so geformt und angeordnet sind, dass auf sie von den Lichteintrittsoptiken 24, 26 her einfallendes Licht 30 der ersten Lichtfarbe und Licht 32 der zweiten Lichtfarbe in Teilbündel zerlegt wird und dass ein Teilbündel aus dem Strahlengang der ersten Lichtfarbe räumlich mit einem Teilbündel aus dem Strahlengang der zweiten Lichtfarbe vertauscht wird.

Figur 4 zeigt resultierende Teilbündel 30.1, 30.2, 32.1, und 32.2, wobei jedes Teilbündel durch einen Strahlengang eines einzelnen Strahls repräsentiert wird. Der einzelne Strahl kann gewissermaßen als zentraler Strahl eines Teilbündels 30.1,30.2, 32.1, 32.2 betrachtet werden, der stellvertretend für das jeweilige Teilbündel 30.1,30.2, 32.1, 32.2 dargestellt ist. Wie Figur 4 zeigt, wird ein erstes Teilbündel 30.1 des Lichtes 30 der ersten Lichtfarbe (d.h. der ersten Lichtquelle 20) an der rückseitigen Umlenkfläche 18.4 des Lichtleiters 18 nur einmal umgelenkt, wobei die Umlenkung in eine erste Richtung erfolgt. Jede erste in einem Strahlengang an der rückseitigen Umlenkfläche 18.4 erfolgende Umlenkung wird im Folgenden als erste Umlenkung bezeichnet. In den Lichteintrittsoptiken 24, 26 erfolgende Umlenkungen zählen insofern nicht.

Analog dazu wird ein erstes Teilbündel 32.1 des Lichtes 32 der zweiten Lichtfarbe (bzw. der zweiten Lichtquelle 22) an der rückseitigen Umlenkfläche 18.4 des Lichtleiters 18 nur einmal umgelenkt, wobei die Umlenkung ebenfalls in die erste Richtung erfolgt.

Ein zweites Teilbündel 30.2 des Lichtes 30 der ersten Lichtquelle 20 wird dagegen zunächst in einer ersten Umlenkung quer zu der ersten Richtung (bspw. also quer zu der Hauptlichtaustrittsrichtung 28) in den Strahlengang des zweiten Teilbündels 32.2 des Lichtes 32 der zweiten Lichtquelle 32 reflektiert und erst anschließend in einer zweiten Umlenkung in die erste Richtung reflektiert.

Die erste Richtung wird vom Konstrukteur des Lichtleiters konstruktiv vorgegeben. Die Auswahl dieser Richtung hängt gegebenenfalls von der Form und Anordnung weiterer optischer Flächen (brechend oder reflektierend) inklusive der Lichtaustrittsfläche ab. Die erste Richtung entspricht zum Beispiel der Hauptlichtaustrittsrichtung 28 in Figur 1.

Analog wird ein zweites Teilbündel 32.2 des Lichtes 32 der zweiten Lichtfarbe/Lichtquelle 22 dagegen zunächst quer zu der ersten Richtung in den Strahlengang des ersten Teilbündels 30.1 des Lichtes 30 der ersten Lichtfarbe/Lichtquelle 20 reflektiert und erst anschließend in die erste Richtung reflektiert.

Dadurch werden die beiden zweiten Teilbündel 30.2 und 32.2 räumlich vertauscht. Im Ergebnis wird dadurch die Auflösung, mit welcher die Lichtaustrittsfläche 18.3 aus dem Inneren des Lichtleiters 18 heraus beleuchtet wird, verfeinert. Als erwünschte Folge wird die Gleichmäßigkeit des Erscheinungsbildes der Lichtaustrittsfläche 18.3 des Lichtleiters 18 verbessert.

Ein Bereich der Lichtaustrittsfläche 18.3, der beim Stand der Technik z.B. zwei nebeneinander liegende, gleich breite Teilbereiche aufweist, von denen einer mit der ersten Lichtfarbe 30 und der andere mit der zweiten Lichtfarbe 32 beleuchtbar ist, weist bei der Erfindung z.B. vier gleich breite, bzw. gleich schmale Teilbereiche auf, von denen ein erster Teilbereich und ein dritter Teilbereich mit Licht 30 der ersten Lichtfarbe und ein zweiter und ein vierter Teilbereich mit Licht 32 der zweiten Lichtfarbe ausleuchtbar ist.

Dabei grenzt der zweite Teilbereich an jeweils einer Seite an den ersten Teilbereich und den dritten Teilbereich an, und der dritte Teilbereich grenzt an jeweils einer Seite an den zweiten und den vierten Teilbereich an. Die Lichtaustrittsfläche 18.3 wird dementsprechend mit einer höheren Auflösung (Auflösung: Zahl der Teilbereiche pro Längeneinheit) ausgeleuchtet, was ein homogener hell leuchtendes Erscheinungsbild als beim Stand der Technik auch bei kürzerer Betrachtungsentfernung zur Folge hat.

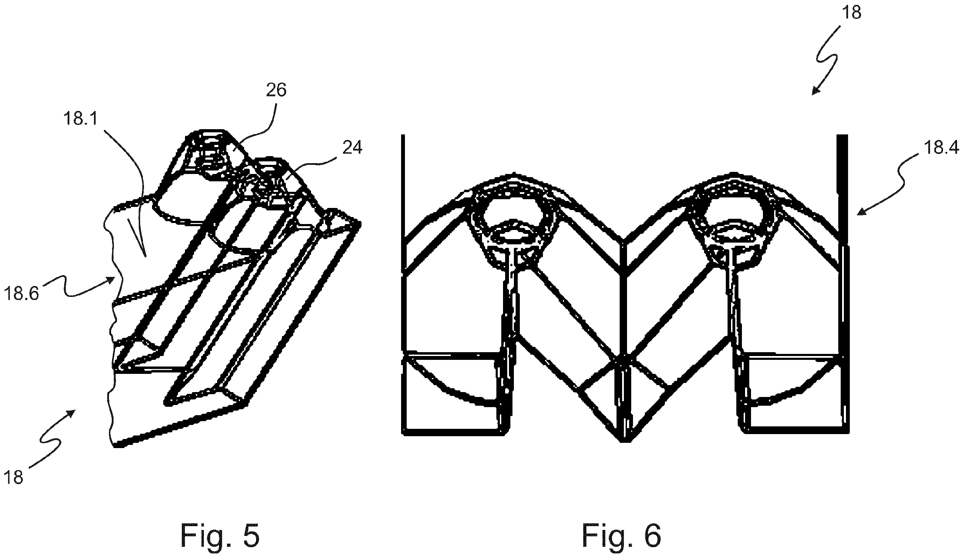

Figur 5 zeigt eine perspektivische Darstellung eines Lichtleiterabschnitts 18.6 eines Lichtleiters 18 einer erfindungsgemäßen Signalleuchte mit zwei Lichteintrittsoptiken 24, 26.

Figur 5 zeigt insbesondere einen Lichtleiter 18, dessen Seitenfläche 18.1, aus der die Lichteintrittsoptiken 24, 26 herausragen, eben und glatt ist. Diese in der Figur 5 obere Seitenfläche 18.1 stellt bevorzugt eine Transportfläche dar, an der über die Lichteintrittsoptiken 24, 26 eingetretenes und in die erste Richtung umgelenktes Licht Reflexionen, bevorzugt interne Totalreflexionen, erfährt, mit denen das Licht letztlich zur Lichtaustrittsfläche 18.3 umgelenkt wird. Die dieser Seite gegenüberliegende und in der Figur 5 untere Seitenfläche 18.2 bildet ebenfalls eine solche Transportfläche. Diese Transportfläche wird in der Figur 5 durch den Lichtleiter 18 verdeckt. Die rückseitige Umlenkfläche 18.4 wird in der Figur 5 ebenfalls durch den Lichtleiter 18 verdeckt. Diese rückseitige Umlenkfläche 18.4 weist eine Mehrzahl von Umlenkteilflächen auf, die z.B. so geformt und angeordnet sind, dass sich die in der Figur 4 dargestellten Strahlengänge ergeben. Die rückseitige Umlenkfläche 18.4 liegt bevorzugt schräg zu den beiden Seitenflächen 18.1, 18.2 und schließt mit der oberen Seitenfläche 18.1 im Lichtleiter 18 einen spitzen Winkel (kleiner als ein rechter Winkel) und mit der unteren Seitenfläche 18.2 im Lichtleiter 18 einen stumpfen Winkel (größer als ein rechter Winkel) ein.

Beim Stand der Technik, wie er in der Figur 3 dargestellt ist, wird das von den Lichteintrittsoptiken 24, 26 bevorzugt parallel ausgerichtete Licht durch eine glatte Rückseite als Umlenkfläche in die gewünschte Richtung umgelenkt und ggf. am Lichtaustritt durch weitere Optiken gerichtet.

Um nun Teilbündel des durch die Lichteintrittsoptiken 24, 26 gesammelten Lichts verschiedener Lichtfarben paarweise räumlich zu tauschen, wird jene rückseitige Umlenkfläche 18.4 verändert, die das Licht zuvor nur in eine gewünschte Richtung umlenkte. Für das paarweise erfolgende Tauschen der Teilbündel werden in die rückseitige Umlenkfläche 18.4 zusätzliche Umlenkteilflächen eingeformt, die ein Teilbündel des von einer der Lichtquellen 20, 22 ausgehenden Strahlenbündels einer Lichtfarbe in Richtung der jeweils anderen Lichtfarbe reflektieren, bevor es dort wieder in die letztlich gewünschte Richtung umgelenkt wird.

Je nach verfügbarem Bauraum können dabei pro Lichteintrittsoptik 24, 26 eine oder mehrere Umlenkteilflächen verwendet werden. Die Umlenkteilflächen müssen dabei keine Ebenen sein, sondern können als Freiformflächen gebildet werden, die das dort jeweils umgelenkte Teilbündel z.B. aufweiten oder fokussieren.

Figur 6 zeigt eine Schrägansicht des Lichtleiters 18 aus der Figur 5 aus einem Blickwinkel, in dem die in die rückseitige Umlenkfläche 18.4 des Lichtleiters 18 eingeformten Umlenkteilflächen sichtbar sind, mit denen sich für ein Paar von nebeneinander angeordneten Lichtquellen die Aufteilung von deren Licht in vier Teilbündel ergibt.

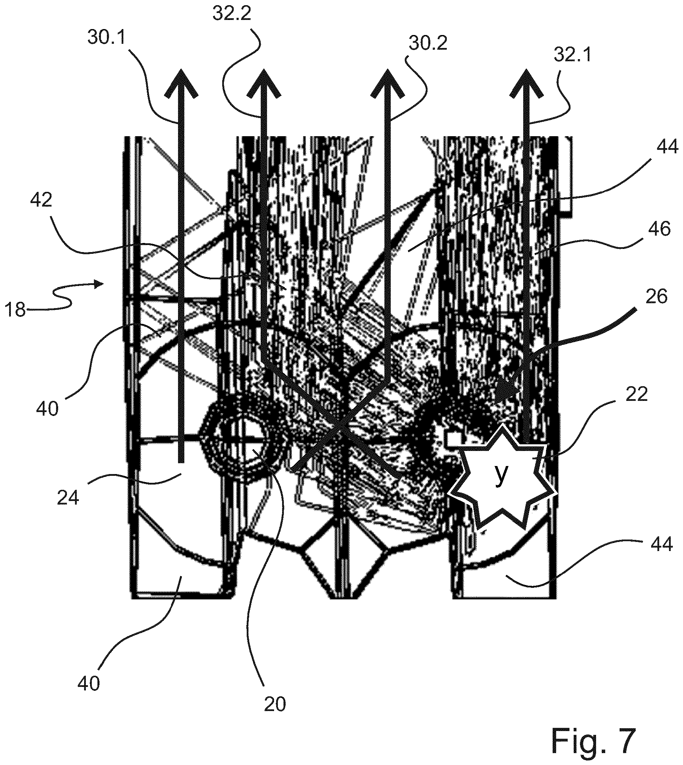

Figur 7 zeigt den Gegenstand der Figuren 5 und 6 in einer Draufsicht zusammen mit ausgewählten Lichtstrahlen, bzw. Teillichtbündeln 32.1, 32.2 von Licht 32 der zweiten Lichtfarbe, das von der im rechten Teil dargestellten Lichtquelle 22 ausgeht. Aus Figur 7 ist insbesondere die Aufteilung des von einer Lichtquelle, hier der Lichtquelle 22, ausgehenden Lichtes in zwei räumlich voneinander getrennte Teilbündel 32.1, 32.2 erkennbar.

Der in der Figur 7 dargestellte Lichtleiter 118 weist vier rückseitige Umlenkteilflächen 40, 42, 44, 46 auf, die in der gleichen Richtung nebeneinander angeordnet sind, wie die Lichteintrittsoptiken 24, 26.

Eine erste Umlenkteilfläche 40 der vier Umlenkteilflächen 40, 42, 44, 46 ist so angeordnet, dass sie von einem ersten Teilbündel 30.1 des Lichtes 30 der ersten Lichtfarbe beleuchtbar ist.

Eine zweite Umlenkteilfläche 42 der vier Umlenkteilflächen 40, 42, 44, 46 ist so angeordnet, dass sie von einem zweiten Teilbündel 30.2 des Lichtes 30 der ersten Lichtfarbe beleuchtbar ist. Ein Normalenvektor der Umlenkteilfläche 40 steht senkrecht auf einem Normalenvektor der Umlenkteilfläche 42.

Eine dritte Umlenkteilfläche 44 der vier Umlenkteilflächen 40, 42, 44, 46 ist so angeordnet, dass sie von einem ersten Teilbündel 32.1 des Lichtes 32 der zweiten Lichtfarbe beleuchtbar ist.

Eine vierte Umlenkteilfläche 46 der vier Umlenkteilflächen 40, 42, 44, 46 ist so angeordnet, dass sie von einem zweiten Teilbündel 32.2 des Lichtes 32 der zweiten Lichtfarbe beleuchtbar ist. Ein Normalenvektor der Umlenkteilfläche 44 steht senkrecht auf einem Normalenvektor der Umlenkteilfläche 46.

Ein Normalenvektor der Umlenkteilfläche 42 ist parallel zu einem Normalenvektor der Umlenkteilfläche 46. Ein Normalenvektor der Umlenkteilfläche 40 ist parallel zu einem Normalenvektor der Umlenkteilfläche 44.

Die zweite Umlenkteilfläche 42 der vier Umlenkteilflächen 40, 42, 44, 46 und die dritte Umlenkteilfläche 44 der vier Umlenkteilflächen sind so angeordnet, dass die zweite Umlenkteilfläche 42 mit an der dritten Umlenkteilfläche 44 reflektiertem Licht 32.2 des zweiten Teilbündels des Lichtes 32 der zweiten Lichtquelle 22 beleuchtbar ist.

Die dritte Umlenkteilfläche 44 und die zweite Umlenkteilfläche 42 sind so angeordnet, dass die dritte Umlenkteilfläche 44 mit an der zweiten Umlenkteilfläche 42 reflektiertem Licht 30.2 des zweiten Teilbündels des Lichtes 30 der ersten Lichtquelle 20 beleuchtbar ist.

Insgesamt sind die vier Umlenkteilflächen so angeordnet, dass das von Ihnen reflektierte Licht der vier Teilbündel eine gemeinsame Hauptabstrahlrichtung aufweist.

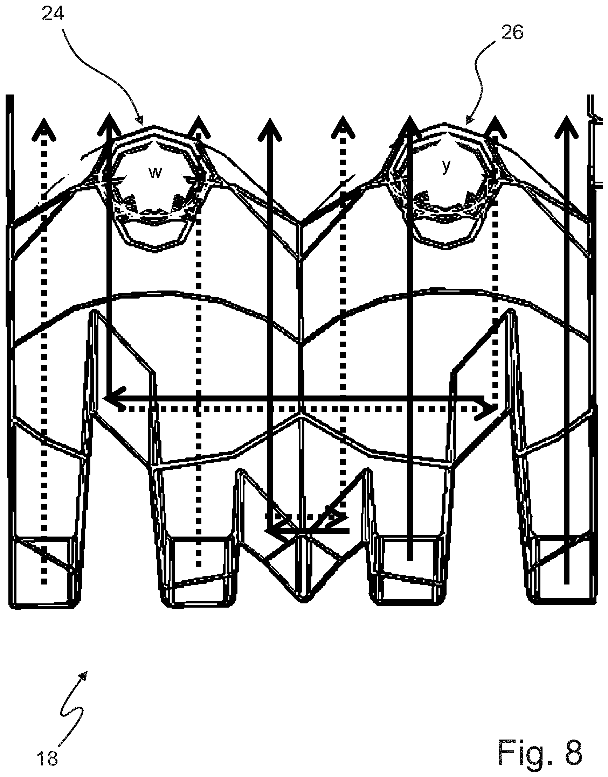

Figur 8 zeigt eine Ansicht eines Lichtleiters 18 eines weiteren Ausführungsbeispiels einer erfindungsgemäßen Signalleuchte. Die Blickrichtung, mit der sich diese Ansicht ergibt, entspricht der Blickrichtung, mit der sich die in der Figur 6 dargestellte Ansicht ergibt.

Der in den Figuren 6 und 7 dargestellte Lichtleiter 18 weist für ein Paar von Lichteintrittsoptiken 24, 26 jeweils ein Paar von Umlenkflächen pro Lichteintrittsoptik auf, wobei jedes Paar das von einer Lichteintrittsoptik 24, 26 ausgehende Licht in zwei Teilbündel 30.1, 30.2, 32.1, 32.2 aufteilt.

Der Gegenstand der Figur 8 weist diese Umlenkflächen ebenfalls auf. Darüber hinaus weist der in der Figur 8 dargestellte Lichtleiter 18 für jede Lichteintrittsoptik eine zusätzliche Umlenkfläche auf, die in Richtung der Nebeneinanderanordung der Lichteintrittsoptiken 24, 26 weiter außen und in der letztlich gewünschten Propagationsrichtung weiter von den Lichteintrittsoptiken 24, 26 entfernt liegen als die auch beim Gegenstand der Figuren 5 bis 7 vorhandenen Umlenkflächen.

## Patentansprüche

1. Signalleuchte (10) mit einem Lichtleiter (18), der wenigstens einen Lichtleiterabschnitt (18.6) aufweist, einer ersten Lichtquelle (20), mit der Licht (30) einer ersten Lichtfarbe emittierbar ist, und einer zweiten Lichtquelle (22), mit der Licht (32) einer zweiten Lichtfarbe emittierbar ist, wobei der Lichtleiterabschnitt (18.6) eine erste Lichteintrittsoptik (24) aufweist, die dazu eingerichtet ist, ein von der ersten Lichtquelle (20) ausgehendes Lichtbündel aufzunehmen und zu einem im Lichtleiterabschnitt (18.6) propagierenden Lichtbündel umzuformen, wobei der Lichtleiterabschnitt (18.6) eine zweite Lichteintrittsoptik (26) aufweist, die dazu eingerichtet ist, ein von der zweiten Lichtquelle (22) ausgehendes Lichtbündel aufzunehmen und zu einem im Lichtleiterabschnitt (18.6) propagierenden Lichtbündel umzuformen, wobei die Lichteintrittsoptiken (24, 26) nebeneinander angeordnet sind, **dadurch gekennzeichnet, dass** der Lichtleiterabschnitt (18.6) vier Umlenkteilflächen (40, 42, 44, 46) aufweist, die in der gleichen Richtung nebeneinander angeordnet sind wie die Lichteintrittsoptiken (24, 26), wobei eine erste Umlenkteilfläche (40) der vier Umlenkteilflächen (40, 42, 44, 46) so angeordnet ist, dass sie von einem ersten Teilbündel (30.1) des Lichtes (30) der ersten Lichtfarbe beleuchtet ist, eine zweite Umlenkteilfläche (42) der vier Umlenkteilflächen (40, 42, 44, 46) so angeordnet ist, dass sie von einem zweiten Teilbündel (30.2) des Lichtes (30) der ersten Lichtfarbe beleuchtet ist, eine dritte Umlenkteilfläche (44) der vier Umlenkteilflächen (40, 42, 44, 46) so angeordnet ist, dass sie von einem ersten Teilbündel (32.1) des Lichtes (32) der zweiten Lichtfarbe beleuchtet ist, und eine vierte Umlenkteilfläche (46) der vier Umlenkteilflächen (40, 42, 44, 46) so angeordnet ist, dass sie von einem zweiten Teilbündel (32.2) des Lichtes (32) der zweiten Lichtfarbe beleuchtet ist, wobei die zweite Umlenkteilfläche (42) der vier Umlenkteilflächen (40, 42, 44, 46) und die dritte Umlenkteilfläche (44) der vier Umlenkteilflächen (40, 42, 44, 46) so angeordnet sind, dass die zweite Umlenkteilfläche (42) mit an der dritten Umlenkteilfläche (44) reflektiertem Licht des zweiten Teilbündels (32.2) des Lichtes (32) der zweiten Lichtfarbe beleuchtet ist, und die dritte Umlenkteilfläche (44) mit an der zweiten Umlenkteilfläche (42) reflektiertem Licht des zweiten Teilbündels (30.2) des Lichtes (30) der ersten Lichtfarbe (20) beleuchtet ist.

2. Signalleuchte (10) nach Anspruch 1, **dadurch gekennzeichnet, dass** das Licht der ersten Lichtfarbe weißes Licht für eine Tagfahrlichtfunktion oder rotes Licht für eine Heckleuchtenfunktion ist.

3. Signalleuchte (10) nach Anspruch 1 oder 2, **dadurch gekennzeichnet, dass** das Licht der zweiten Lichtfarbe gelbes Licht für eine Blinklichtfunktion ist.

4. Signalleuchte (10) nach einem der vorhergehenden Ansprüche, **dadurch gekennzeichnet, dass** die Lichteintrittsoptiken (24, 26) dazu eingerichtet sind, einen Öffnungswinkel des in sie eintretenden und in ihnen propagierenden Lichtes zu verkleinern.

5. Signalleuchte (10) nach Anspruch 4, **dadurch gekennzeichnet, dass** die Lichteintrittsoptiken dazu eingerichtet sind, das in sie eintretende und in ihnen propagierende Licht parallel auszurichten.

6. Signalleuchte (10) nach einem der vorhergehenden Ansprüche, **dadurch gekennzeichnet, dass** die Lichteintrittsoptiken (24, 26), integrale, stoffschlüssige Bestandteile des Lichtleiters (18) sind.

7. Signalleuchte (10) nach einem der vorhergehenden Ansprüche, **dadurch gekennzeichnet, dass** der Lichtleiterabschnitt (18.6) eine Lichtaustrittsfläche (18.3), eine der Lichtaustrittsfläche (18.3) längs der Hauptlichtausbreitungsrichtung des Lichtes im Lichtleiterabschnitt gegenüberliegende rückseitige Umlenkfläche (18.4) und sich zwischen der Lichtaustrittsfläche (18.3) und der rückseitigen Umlenkfläche (18,4) erstreckende Seitenflächen (18.1, 18.2) aufweist, wobei die rückseitige Umlenkfläche (18.4) nicht rechtwinklig, sondern schräg zu den Seitenflächen (18.1) und (18.2) angeordnet ist.

8. Signalleuchte (10) nach Anspruch 7, **dadurch gekennzeichnet, dass** die rückseitige Umlenkfläche (18.2) einzelne Umlenkteilflächen (40, 42, 44,46) aufweist, die so geformt und angeordnet sind, dass auf sie von den Lichteintrittsoptiken (24, 26) her einfallendes Licht (30) der ersten Lichtfarbe und Licht (32) der zweiten Lichtfarbe in die Teilbündel (30.1, 30.2, 32.1, 32.2) zerlegt wird.

9. Signalleuchte (10) nach Anspruch 8, **dadurch gekennzeichnet, dass** die Umlenkteilflächen (40, 42, 44, 46) so angeordnet sind, dass ein Teilbündel (30.2) aus einem Strahlengang des Lichtes der ersten Lichtfarbe (30) räumlich mit einem Teilbündel (32.2) aus einem Strahlengang des Lichtes (32) der zweiten Lichtfarbe vertauscht wird.

10. Signalleuchte (10) nach einem der vorhergehenden Ansprüche, **dadurch gekennzeichnet, dass** der Lichtleiter (18) ein einstückiger Lichtleiter ist, der mehrere der Lichtleiterabschnitte (18.6) aufweist, wobei die Lichtleiterabschnitte (18.6) nebeneinander liegen, so dass die Lichtaustrittsflächen der Lichtleiterabschnitte (18.6) eine zusammenhängende Lichtaustrittsfläche des Lichtleiters bilden.

## Claims

1. Signal light (10) with a light guide (18) comprising at least one light guide segment (18.6), a primary light source (20) that can emit light (30) of a primary light colour, and a secondary light source (22) that can emit light (32) of a secondary light colour, whereby the light guide segment (18.6) comprises primary light intake optics (24) designed to receive a light beam emitted by the primary light source (20) and convert it to a propagating light beam in the light guide segment (18.6), whereby the light guide segment (18.6) comprises secondary light intake optics (26) designed to receive a light beam emitted by the secondary light source (22) and convert it to a propagating light beam in the light guide segment (18.6), whereby the light intake optics (24, 26) are adjacent to one another, **characterised in that** the light guide segment (18.6) comprises four redirection subareas (40, 42, 44, 46) adjacent to one another in the same direction as the light intake optics (24, 26), whereby an initial redirection subarea (40) of the four redirection subareas (40, 42, 44, 46) is arranged such that it is illuminated by an initial sub-beam (30.1) of the light (30) of the primary light colour, a second redirection subarea (42) of the four redirection subareas (40, 42, 44, 46) is arranged such that it is illuminated by a second sub-beam (30.2) of the light (30) of the primary light colour, a third redirection subarea (44) of the four redirection subareas (40, 42, 44, 46) is arranged such that it is illuminated by an initial sub-beam (32.1) of the light (32) of the secondary light colour, a fourth redirection subarea (46) of the four redirection subareas (40, 42, 44, 46) is arranged such that it is illuminated by a second sub-beam (32.2) of the light (32) of the secondary light colour, whereby the second redirection subarea (42) of the four redirection subareas (40, 42, 44, 46) and the third redirection subarea (44) of the four redirection subareas (40, 42, 44, 46) are arranged such that the second redirection subarea (42) is illuminated with light reflected on the third redirection subarea (44) from the second sub-beam (32.2) of the light (32) of the secondary light colour, and the third redirection subarea (44) is illuminated with light reflected on the second redirection sub-area (42) from the second sub-beam (30.2) of the light (30) of the primary light colour (20).

2. Signal light (10) as per claim 1, **characterised in that** the light of the primary light colour is white light for daytime lighting, or red light for taillights.

3. Signal light (10) as per claim 1 or 2, **characterised in that** the light of the secondary light colour is yellow light for blinking lights.

4. Signal light (10) as per one of the preceding claims, **characterised in that** the light intake optics (24, 26) are designed to reduce an aperture angle of the light entering into and propagating within them.

5. Signal light (10) as per claim 4, **characterised in that** the light intake optics are designed to make parallel the light entering into and propagating within them.

6. Signal light (10) as per one of the preceding claims, **characterised in that** the light intake optics (24, 26) are integral, firmly bonded components of the light guide (18) .

7. Signal light (10) as per one of the preceding claims, **characterised in that** the light guide segment (18.6) comprises a light output area (18.3), a rear redirection area (18.4) opposite the light output area (18.3) along the main direction of light propagation in the light guide segment, and side areas (18.1, 18.2) extending between the light output area (18.3) and the rear redirection area (18.4), whereby the rear redirection area (18.4) does not form a right angle with the side areas (18.1, 18.2) but rather is slanted.

8. Signal light (10) as per claim 7, **characterised in that** the rear redirection area (18.2) comprises individual redirection subareas (40, 42, 44, 46) that are designed and arranged such that light (30, 32) cast onto them from the light intake optics (24, 26) of the primary light colour and secondary light colour, respectively, is fragmented into the sub-beams (30.1, 30.2, 32.1, 32.2).

9. Signal light (10) as per claim 8, **characterised in that** the redirection subareas (40, 42, 44, 46) are arranged such that a sub-beam (30.2) from a beam of light (30) of the primary light colour is spatially interchanged with a sub-beam (32.2) from a beam of light (32) of the secondary light colour.

10. Signal light (10) as per one of the preceding claims, **characterised in that** the light guide (18) is one single unit comprising multiple light guide segments (18.6), whereby the light guide segments (18.6) are adjacent to one another such that the light output areas of the light guide segments (18.6) form one cohesive light output area of the light guide.

## Revendications

1. Feu de signalisation (10) comprenant un guide de lumière (18) qui présente au moins une section de guide de lumière (18.6), une première source de lumière (20) qui permet d'émettre une lumière (30) d'une première couleur de lumière, et une deuxième source de lumière (22) qui permet d'émettre une lumière (32) d'une deuxième couleur de lumière, dans lequel la section de guide de lumière (18.6) présente une première optique d'entrée de lumière (24) qui est configurée pour recevoir un faisceau lumineux provenant de la première source de lumière (20) et pour transformer celui-ci en un faisceau lumineux se propageant dans la section de guide de lumière (18.6), dans lequel la section de guide de lumière (18.6) présente une deuxième optique d'entrée de lumière (26) qui est configurée pour recevoir un faisceau lumineux provenant de la deuxième source de lumière (22) et pour transformer celui-ci en un faisceau lumineux se propageant dans la section de guide de lumière (18.6), les optiques d'entrée de lumière (24, 26) étant disposées les unes à côté des autres, **caractérisé par le fait que** la section de guide de lumière (18.6) présente quatre surfaces partielles déviatrices (40, 42, 44, 46) qui sont disposées les unes à côté des autres dans la même direction que les optiques d'entrée de lumière (24, 26), une première surface partielle déviatrice (40) des quatre surfaces partielles déviatrices (40, 42, 44, 46) étant agencée de telle sorte qu'elle soit éclairée par un premier faisceau partiel (30.1) de la lumière (30) de la première couleur de lumière, une deuxième surface partielle déviatrice (42) des quatre surfaces partielles déviatrices (40, 42, 44, 46) étant agencée de telle sorte qu'elle soit éclairée par un deuxième faisceau partiel (30.2) de la lumière (30) de la première couleur de lumière, une troisième surface partielle déviatrice (44) des quatre surfaces partielles déviatrices (40, 42, 44, 46) étant agencée de telle sorte qu'elle soit éclairée par un premier faisceau partiel (32.1) de la lumière (32) de la deuxième couleur de lumière et une quatrième surface partielle déviatrice (46) des quatre surfaces partielles déviatrices (40, 42, 44, 46) étant agencée de telle sorte qu'elle soit éclairée par un deuxième faisceau partiel (32.2) de la lumière (32) de la deuxième couleur de lumière, dans lequel la deuxième surface partielle déviatrice (42) des quatre surfaces partielles déviatrices (40, 42, 44, 46) et la troisième surface partielle déviatrice (44) des quatre surfaces partielles déviatrices (40, 42, 44, 46) sont agencées de telle sorte que la deuxième surface partielle déviatrice (42) est éclairée par de la lumière du deuxième faisceau partiel (32.2) de la lumière (32) de la deuxième couleur de lumière, qui est réfléchie sur la troisième surface partielle déviatrice (44) et que la troisième surface partielle déviatrice (44) est éclairée par de la lumière du deuxième faisceau partiel (30.2) de la lumière (30) de la première couleur de lumière (20), qui est réfléchie sur la deuxième surface partielle déviatrice (42).

2. Feu de signalisation (10) selon la revendication 1, **caractérisé par le fait que** la lumière de la première couleur de lumière est de la lumière blanche pour une fonction de feux de jour ou de la lumière rouge pour une fonction de feu arrière.

3. Feu de signalisation (10) selon la revendication 1 ou 2, **caractérisé par le fait que** la lumière de la deuxième couleur de lumière est de la lumière jaune pour une fonction de feu clignotant.

4. Feu de signalisation (10) selon l'une quelconque des revendications précédentes, **caractérisé par le fait que** les optiques d'entrée de lumière (24, 26) sont conçues pour réduire un angle d'ouverture de la lumière entrant et se propageant dans celles-ci.

5. Feu de signalisation (10) selon la revendication 4, **caractérisé par le fait que** les optiques d'entrée de lumière sont conçues pour aligner parallèlement la lumière qui entre et se propage dans celles-ci.

6. Feu de signalisation (10) selon l'une quelconque des revendications précédentes, **caractérisé par le fait que** les optiques d'entrée de lumière (24, 26) font partie intégrante et sont des composants à liaison de matière du guide de lumière (18).

7. Feu de signalisation (10) selon l'une quelconque des revendications précédentes, **caractérisé par le fait que** la section de guide de lumière (18.6) présente une surface de sortie de lumière (18.3), une surface déviatrice arrière (18.4) située en vis-à-vis de la surface de sortie de lumière (18.3) suivant la direction principale de propagation de lumière de la lumière dans la section de guide de lumière ainsi que des surfaces latérales (18.1, 18.2) s'étendant entre la surface de sortie de lumière (18.3) et la surface déviatrice arrière (18,4), dans lequel la surface déviatrice arrière (18.4) n'est pas disposée à angle droit, mais est disposée obliquement par rapport aux surfaces latérales (18.1) et (18.2).

8. Feu de signalisation (10) selon la revendication 7, **caractérisé par le fait que** la surface déviatrice arrière (18.2) présente des surfaces partielles déviatrices (40, 42, 44, 46) individuelles qui sont formées et agencées de telle manière que de la lumière (30) de la première couleur de lumière et de la lumière (32) de la deuxième couleur de lumière provenant des optiques d'entrée de lumière (24, 26) et incidente sur celles-ci est décomposée en faisceaux partiels (30.1, 30.2, 32.1, 32.2) .

9. Feu de signalisation (10) selon la revendication 8, **caractérisé par le fait que** les surfaces partielles déviatrices (40, 42, 44, 46) sont agencées de telle sorte qu'un faisceau partiel (30.2) d'un trajet de faisceau de la lumière de la première couleur de lumière (30) est échangé spatialement avec un faisceau partiel (32.2) d'un trajet de faisceau de la lumière (32) de la deuxième couleur de lumière.

10. Feu de signalisation (10) selon l'une quelconque des revendications précédentes, **caractérisé par le fait que** le guide de lumière (18) est un guide de lumière fait d'une seule pièce qui comprend plusieurs des sections de guide de lumière (18.6), dans lequel les sections de guide de lumière (18.6) sont situées les unes à côté des autres de sorte que les surfaces de sortie de lumière des sections de guide de lumière (18.6) forment une surface de sortie de lumière continue du guide de lumière.
